(19) Europäisches Patentamt / European Patent Office / Office européen des brevets

(11) **EP 4 741 530 A1**

(12) **EUROPEAN PATENT APPLICATION**
published in accordance with Art. 153(4) EPC

(43) Date of publication:
**13.05.2026 Bulletin 2026/20**

(21) Application number: **24839690.5**

(22) Date of filing: **05.07.2024**

(51) International Patent Classification (IPC):
**C23C 22/66** (2006.01)   **B32B 15/08** (2006.01)
**B65D 65/42** (2006.01)

(52) Cooperative Patent Classification (CPC):
**B32B 15/08; B65D 65/42; C23C 22/66**

(86) International application number:
**PCT/JP2024/024488**

(87) International publication number:
**WO 2025/013798 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 JP 2023112266**

(71) Applicants:
• **Toyo Kohan Co., Ltd.**
  **Tokyo 141-8260 (JP)**
• **Toyo Seikan Co., Ltd.**
  **Tokyo 141-8640 (JP)**

(72) Inventors:
• **KASHIWAKURA, Takuya**
  **Yokohama-shi, Kanagawa 230-0001 (JP)**
• **NISHIDA, Kazuhiro**
  **Yokohama-shi, Kanagawa 230-0001 (JP)**
• **KANAZAWA, Seitaro**
  **Yokohama-shi, Kanagawa 230-0001 (JP)**
• **TAKENAGA, Tomoyasu**
  **Kudamatsu-shi, Yamaguchi 744-8611 (JP)**
• **TAKEGUCHI, Shota**
  **Kudamatsu-shi, Yamaguchi 744-8611 (JP)**
• **IKEBUCHI, Masashi**
  **Kudamatsu-shi, Yamaguchi 744-8611 (JP)**

(74) Representative: **Hoffmann Eitle**
**Patent- und Rechtsanwälte PartmbB**
**Arabellastraße 30**
**81925 München (DE)**

(54) **RESIN-COATED SEAMLESS ALUMINUM CAN, RESIN-COATED ALUMINUM SHEET, AND DRAWN-IRONED CAN**

(57) [Object]
To provide a resin-coated aluminum seamless can having both resin adhesiveness and a color tone.
[Solving Means]
A resin-coated aluminum seamless can includes an aluminum base material, a surface treatment layer formed on at least one side of the aluminum base material, and a resin layer formed on the surface treatment layer. The surface treatment layer contains aluminum hydroxide, and has a Pa/Pb value of 0.13 to 3.00 when, in an infrared absorption spectrum measured by an FT-IR, a height of an absorbance peak at wavenumbers of 850 to 1000 cm$^{-1}$ is defined as Pa and a height of an absorbance peak at wavenumbers of 1000 to 1200 cm$^{-1}$ is defined as Pb.

Fig.1

(a)

100

10 20 30

(b)

110

30 10 30
20 20

**Description**

[Technical Field]

This disclosure relates to a resin-coated aluminum seamless can, a resin-coated aluminum sheet, and a drawn and ironed can.

[Background Art]

Conventionally, as a metal material for application to containers such as food cans and beverage cans, aluminum sheets have suitably been used for their excellent lightweight property and readily forming processability. Further, resin-coated aluminum sheets obtained by coating aluminum sheets with resin have long been known as a canmaking material, and the manufacture of seamless cans, which are to be filled with a beverage or the like, by subjecting such resin-coated aluminum sheets to drawing or to drawing and ironing are also well known. For example, resin-coated aluminum sheets each having as a resin layer a thermoplastic resin film formed of a crystalline polyester resin composed primarily of ethylene terephthalate units are used as a canmaking material for seamless cans.

On the other hand, as aluminum sheets for use in resin-coated aluminum sheets for such seamless cans, surface-treated aluminum sheets to which surface treatment such as chemical treatment has been applied are used in general to secure corrosion resistance and adhesion with resin layers. As such surface treatment, there is, for example, chromate phosphate treatment, and surface-treated aluminum sheets to which chromate phosphate treatment has been applied have widely been used for their excellent adhesion with resin layers. From the viewpoint of environment protection, however, there is an increasing demand for chromium-free surface treatment. For example, in PTL 1 to PTL 4 described below, treatment that forms aluminum hydroxide on surfaces of an aluminum base material is disclosed as chromium-free surface treatment. It is also disclosed that containers and the like are formed using aluminum base materials subjected to such treatment.

[Citation List]

[Patent Literature]

[PTL 1]
JP 2003-013253A
[PTL 2]
JP 2004-216801A
[PTL 3]
JP 2007-176072A
[PTL 4]
JP H11-012762A

[Summary]

[Technical Problems]

An aluminum hydroxide film formed on a surface of an aluminum base material is considered to be a film composed primarily of alumina monohydrate ($AlO(OH)$) called boehmite. Boehmite is mainly used in sealing treatment for anodized aluminum films, and is known as a material having corrosion resistance. Boehmite is also known for its acicular texture having roughness on the surface. This acicular texture is considered to exhibit an anchoring effect to a resin layer such as a coating film or a film and hence improve resin adhesiveness.

If this aluminum hydroxide coating treatment is applied to a resin-coated aluminum sheet for seamless cans to be formed by severe forming processing such as drawing and ironing, however, there are such problems as will be described hereinafter. Described specifically, there were some cases where, when sterilization treatment such as retort treatment after forming of a seamless can and filling of contents was applied to a can body, a resin layer was peeled off due to lack of adhesiveness (hereinafter also called "resin adhesiveness") between an aluminum hydroxide film layer and the resin layer, depending on forming and treatment conditions for the film. Further, there were some other cases where, on an inner surface of a seamless can, corrosion resistance to contents was insufficient due to such lack of resin adhesiveness as described above.

If containers such as seamless cans are formed using an aluminum sheet, on the other hand, there are many cases where a design is applied making use of an excellent color tone, such as a beautiful silver white shade and a metallic gloss, which an aluminum base material has. If severe forming processing such as drawing and ironing was applied to a resin-coated aluminum sheet subjected to aluminum hydroxide coating treatment as described above, however, there were cases where the silver white shade and metallic gloss, which an aluminum base material inherently had, were lost mainly at a processed potion, depending on forming and treatment conditions for the film, leading to a dull white appearance and an impairment in color tone.

The above-mentioned pieces of patent literature do not make sufficient consideration regarding resin adhesiveness upon application of sterilization treatment such as retort treatment as described above, by no means include any finding regarding the deterioration of a color tone of an aluminum base material attributable to an aluminum hydroxide film, and therefore do not solve such problems.

This disclosure has been made with a view to solve such problems, and has as an object thereof the provision of a resin-coated aluminum seamless can having both resin adhesiveness and a color tone. Further, this disclosure also has as another object thereof the provision of a resin-coated aluminum sheet for manufacturing the resin-coated aluminum seamless can having the resin adhesiveness and the color tone.

[Solution to Problems]

To solve the problems exemplified above, a resin-coated aluminum seamless can according to an embodiment of the present invention includes an aluminum base material, a surface treatment layer formed on at least one side of the aluminum base material, and a resin layer formed on the surface treatment layer. The surface treatment layer contains aluminum hydroxide, and has a Pa/Pb value of 0.13 to 3.00 when, in an infrared absorption spectrum measured by a Fourier transform infrared spectrophotometer (FT-IR), a height of an absorbance peak at wavenumbers of 850 to 1000 cm$^{-1}$ is defined as Pa and a height of an absorbance peak at wavenumbers of 1000 to 1200 cm$^{-1}$ is defined as Pb.

In addition, to solve the problems exemplified above, a resin-coated aluminum sheet according to an embodiment of the present invention includes an aluminum base material, a surface treatment layer formed on at least one side of the aluminum base material, and a resin layer formed on the surface treatment layer. The surface treatment layer contains aluminum hydroxide, and has a Pa/Pb value of 0.13 to 3.00 when, in an infrared absorption spectrum measured by an FT-IR, a height of an absorbance peak at wavenumbers of 850 to 1000 cm$^{-1}$ is defined as Pa and a height of an absorbance peak at wavenumbers of 1000 to 1200 cm$^{-1}$ is defined as Pb.

[Advantageous Effect of Invention]

According to this disclosure, a resin-coated aluminum seamless can having both resin adhesiveness and a color tone can be provided.

[Brief Description of Drawing]

[FIG. 1]

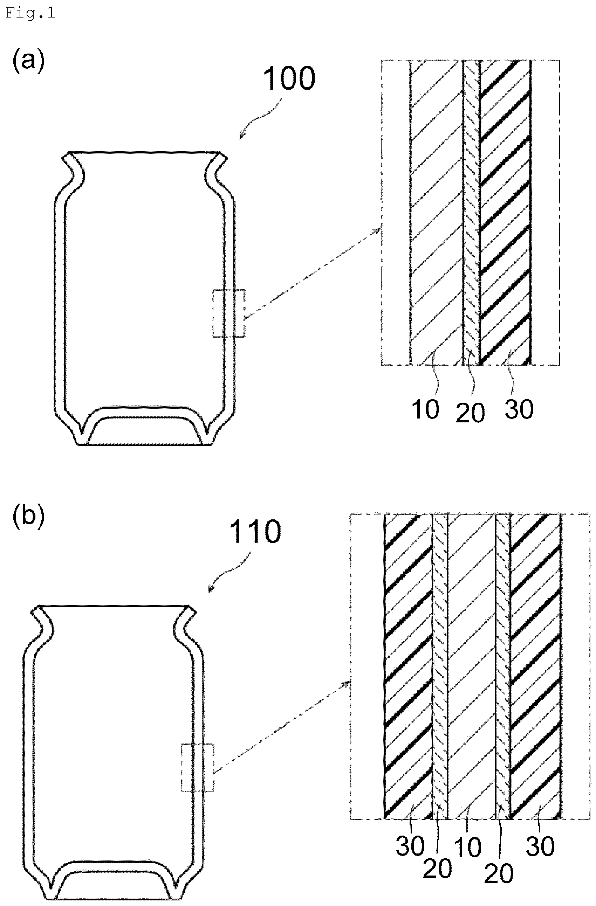

FIG. 1a is a schematic view of a resin-coated aluminum seamless can in an embodiment, and FIG. 1b is a schematic view of a resin-coated aluminum seamless can in another embodiment.
[FIG. 2]

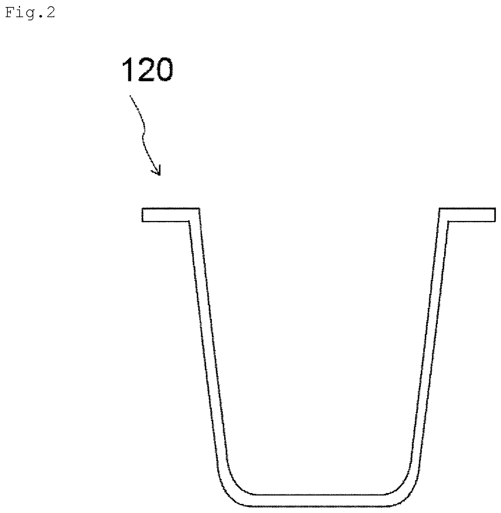

FIG. 2 is a schematic view of a resin-coated aluminum seamless can in still another embodiment.
[FIG. 3]

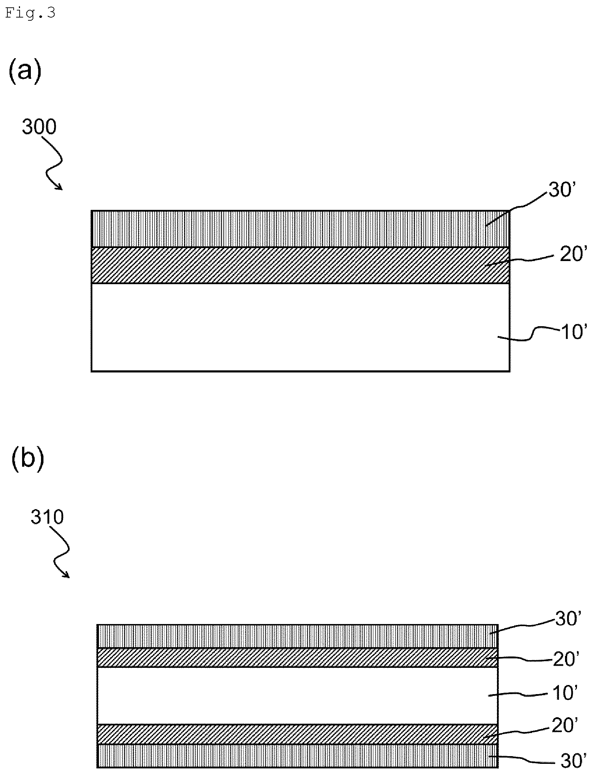

FIG. 3a is a schematic view of a resin-coated aluminum sheet according to an embodiment, and FIG. 3b is a schematic view of a resin-coated aluminum sheet in another embodiment.
[FIG. 4]

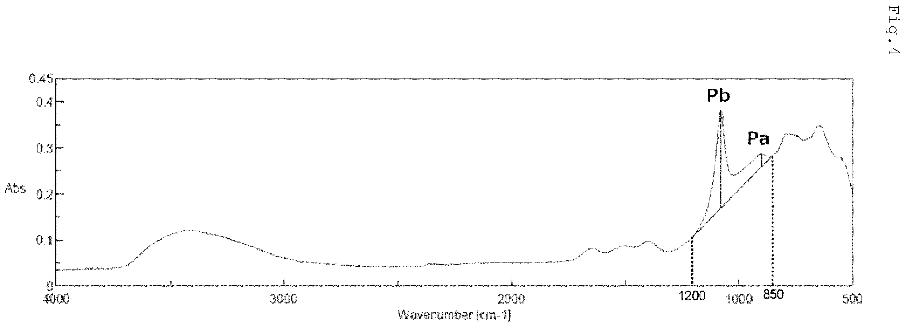

FIG. 4 is a diagram illustrating an example of an infrared absorption spectrum.

[Description of Embodiments]

Descriptions will hereinafter be made regarding embodiments of a resin-coated aluminum seamless can of this disclosure with use of the drawings. It is to be noted that, in this disclosure, "resin adhesiveness" denotes, in principle, adhesiveness between a surface treatment layer and a resin layer after having undergone retort treatment subsequent to forming processing as mentioned above. Further, a "color tone" should include a color difference ($\Delta E$) and lightness (L* value) to be described later.

<Resin-coated Aluminum Seamless Can 100>

FIG. 1 is a view schematically depicting one embodiment of the resin-coated aluminum seamless can. As depicted in FIG. 1, a resin-coated aluminum seamless can 100 has a bottomed cylindrical shape that a can barrel portion and a can bottom portion are in an integrated form. However, the shape of the resin-coated aluminum seamless can 100 of this embodiment is not limited to the shape depicted in FIG. 1, and can be a known shape applied to beverage cans, food cans, or the like.

More specifically, the shape of the resin-coated aluminum seamless can 100 may be the shape of what is generally called a tapered container 120 (see FIG. 2) in which its diameter is different between the can bottom portion and a can top portion (opening portion) and its side wall portion is formed as an oblique surface. A step may be included in a tapered portion (not depicted). Alternatively, the shape of the resin-coated aluminum seamless can 100 may be the shape of a can body that is rounded at corner portions and that has a substantially rectangular shape and a shallow bottom (for example, the shape of canned food or the like of seafood such as sardines), or may be a prismatic shape (not depicted).

Further, the height of the resin-coated aluminum seamless can 100 is appropriately adjustable according to its application.

The resin-coated aluminum seamless can 100 includes an aluminum base material 10, a surface treatment layer 20 formed on at least one side of the aluminum base material 10, and a resin layer 30 formed on the surface treatment layer 20.

It is to be noted that the resin-coated aluminum seamless can 100 depicted in FIG. 1a has the surface treatment layer 20 and the resin layer 30 on a side of an outer surface of the can, although not limited to this. Described specifically, the resin-coated aluminum seamless can 100 may include the surface treatment layer 20 and the resin layer 30 on a side of an inner surface of the can (not depicted). As a further alternative, this embodiment as depicted in FIG. 1b may also be a resin-coated aluminum seamless can 110 including the surface treatment layer 20 and the resin layer 30 in this order from the aluminum base material 10 on both the inner surface side and the outer surface side. In this case, the surface treatment layer 20 and the resin layer 30 on the side of the inner surface of the can and those on the side of the outer surface of the can may be the same or different in kind and thickness. In addition, the presentation of the surface treatment layer 20 and the resin layer 30 is omitted in the tapered container 120 in FIG. 2, but as in FIG. 1, the surface treatment layer 20 and the resin layer 30 are formed on at least one of the inner surface and the outer surface of the container.

<Aluminum Base Material 10>

In the resin-coated aluminum seamless can 100, a pure aluminum sheet or an aluminum alloy sheet can be used as the aluminum base material 10. In general, the thickness of the aluminum base material 10 is preferably 0.10 to 1.00 mm and particularly preferably 0.15 to 0.40 mm. It is to be noted that the alloy type of the aluminum base material 10 is selected according to the application. For example, a 3000 series or 5000 series aluminum alloy sheet of the Japanese Industrial Standards (JIS) is used from the viewpoints of processability, strength, and corrosion resistance.

<Surface Treatment Layer 20>

The surface treatment layer 20 contains aluminum hydroxide. Aluminum hydroxide includes alumina monohydrate (AlO(OH)), alumina trihydrate ($Al(OH)_3$), and the like. By the inclusion of these substances, corrosion resistance and resin adhesiveness can be improved. Aluminum hydroxide in the surface treatment layer 20 can be identified by a peak that appears in a wavenumber range of 1000 to 1200 $cm^{-1}$ (more specifically, a peak around 1070 $cm^{-1}$) in an infrared absorption spectrum measured by an FT-IR. This peak that appears in the wavenumber range of 1000 to 1200 $cm^{-1}$ is known to be an absorbance peak associated with Al-OH bending vibrations originated from aluminum hydroxide.

In the surface treatment layer 20, amorphous alumina ($Al_2O_3$) can also be contained. The amorphous alumina in the surface treatment layer 20 can be identified by a peak that appears in a wavenumber range of 850 to 1000 $cm^{-1}$ (more specifically, a peak around 950 $cm^{-1}$) in the infrared absorption spectrum measured by an FT-IR. This peak that appears in the wavenumber range of 850 to 1000 $cm^{-1}$ is known to be an absorbance peak originated from Al-OH stretching vibrations of amorphous alumina.

It is to be noted that, more specifically, the above-mentioned infrared absorption spectrum measured by an FT-IR can be measured by a high-sensitivity reflection method (reflection absorption spectroscopy (RAS) method) using a known FT-IR.

As a measurement method of the absorbance peaks, an absorbance at a wavenumber of 1200 $cm^{-1}$ and an absorbance at a wavenumber of 850 $cm^{-1}$ in the infrared absorption spectrum are first connected with a straight line, and the straight line is used as a baseline. As the peak originated from Al-O stretching vibrations of amorphous alumina, the highest point from the baseline in the wavenumber range of 850 to 1000 $cm^{-1}$ (around 950 $cm^{-1}$) is then designated as an absorbance peak height Pa. On the other hand, as the peak originated from Al-OH bending vibrations of aluminum hydroxide, the highest point from the baseline in the wavenumber range of 1000 to 1200 cm$^{-1}$ (around 1070 cm$^{-1}$) is designated as an absorbance peak height Pb. A peak ratio "Pa/Pb" is calculated from the values thus obtained.

As described above, the resin-coated aluminum seamless can 100 of this embodiment is characterized in that the peak ratio "Pa/Pb" value is 0.13 to 3.00 when, in an infrared absorption spectrum of the surface treatment layer 20 measured by an FT-IR, the height of an absorbance peak originated from amorphous alumina at wavenumbers of 850 to 1000 cm$^{-1}$ is defined as "Pa" and the height of an absorbance peak originated from aluminum hydroxide at wavenumbers of 1000 to 1200 cm$^{-1}$ is defined as "Pb."

In the infrared absorption spectrum measured by an FT-IR, the absorbance of the surface treatment layer is considered to be in a proportional relation with the amount of chemical species existing in the surface treatment layer and having infrared activity. Accordingly, the value of the peak ratio "Pa/Pb" of the height "Pa" of the absorbance peak originated from amorphous alumina to the height "Pb" of the absorbance peak originated from aluminum hydroxide serves as a scale representing the amount ratio of amorphous alumina to aluminum hydroxide. It is hence indicated that the greater this value, the abundance ratio of amorphous alumina is greater/the abundance ratio of aluminum hydroxide is smaller and that, conversely, the smaller this value, the abundance ratio of amorphous alumina is smaller/the abundance ratio of aluminum hydroxide is greater.

It is for the following reasons that the inventors placed a focus on the peak value "Pa/Pb," in other words, the abundance ratio of amorphous alumina to aluminum hydroxide, in the surface treatment layer 20 in order to obtain the resin-coated aluminum seamless can as intended.

First, a description will be made from the viewpoint of resin adhesiveness. Amorphous alumina ($Al_2O_3$) is contained in the aluminum hydroxide film of boehmite or the like, depending on the forming and treatment conditions for the film. Unlike sparingly soluble aluminum hydroxide, amorphous alumina is known to be dissolved in a short period of time when immersed in hot water.

If water-soluble amorphous alumina is contained in a high proportion in the aluminum hydroxide film existing between the aluminum base material and the resin layer, no sufficient resin adhesiveness is hence considered to be available because the insoluble property or sparingly soluble property of the film cannot be retained and the surface adhered with the resin layer is dissolved by hot water treatment such as retort treatment. Hence, believing that, for obtaining resin adhesiveness, there is a need to control the proportion of amorphous alumina in the film, the inventors proceeded with an extensive study. As a result, it was found possible to retain the insoluble property or sparingly soluble property of the film against hot water and hence obtain sufficient resin adhesiveness by setting the peak ratio "Pa/Pb" to 3.00 or smaller.

Next, a description will be made from the viewpoint of the color tone. If an aluminum hydroxide film is formed on an aluminum base material by the below-mentioned method, it is considered that light becomes more prone to scatter by the roughness of the film as the growth of the acicular texture of boehmite or the like proceeds and that the color tone becomes closer to a white shade by scattering of light when the acicular texture is in an excessively grown state. In addition, if a seamless can is formed from a resin-coated aluminum sheet by drawing and ironing or the like, the film is inferred to become prone to undergo a cohesive failure upon processing if the acicular texture is in an excessively grown state. It is considered that fractures (interstices) occur in the film by the cohesive failure, light is scattered at the fractures, a whiter shade increases, and the metallic gloss is lost, leading to a deterioration of the color tone. From the viewpoint of scattering of light and a cohesive failure of the film upon processing, the present inventors therefore considered that, for suppression of changes in color tone, there is a need to control the extent of the growth of the acicular texture, and proceeded with an extensive study. As a result, it has been found that the setting of the peak ratio "Pa/Pb" to 0.13 or greater can realize a state in which the acicular texture has grown to a moderate extent and a good color tone is still available even after processing.

From the foregoing, it is important in this embodiment that the peak ratio "Pa/Pb" of the above-described surface treatment layer (aluminum hydroxide film) is in the range of 0.13 to 3.00. This makes it possible to obtain a resin-coated aluminum seamless can having both resin adhesiveness and a color tone as required.

In the surface treatment layer in this embodiment, the value of the above-mentioned peak ratio "Pa/Pb" is desirably in a range of 0.13 to 3.00, preferably 0.14 to 2.50, more preferably 0.20 to 2.00, and particularly preferably 0.30 to 1.50. If the value of the peak ratio "Pa/Pb" is greater than the above-described range, the resin adhesiveness deteriorates. If smaller, the color tone deteriorates.

Further, in the surface treatment layer formed on the side of the outer surface of the can, the value of the above-mentioned peak ratio "Pa/Pb" is desirably in a range of 0.13 to 3.00, preferably 0.14 to 2.50, more preferably 0.20 to 2.00, and particularly preferably 0.30 to 1.50. If the value of the peak ratio "Pa/Pb" is greater than the above-described range, the resin adhesiveness deteriorates. If smaller, the color tone deteriorates.

On the other hand, in the surface treatment layer formed on the side of the inner surface of the can, the value of the above-mentioned peak ratio "Pa/Pb" is desirably in a range of 0.30 to 3.00 and preferably 0.35 to 2.00 from the viewpoint of resin adhesiveness and corrosion resistance. If the value of the peak ratio "Pa/Pb" is greater than the above-described range, the resin adhesiveness deteriorates, and due to this, the corrosion resistance to the contents also deteriorates. If the value of the peak ratio "Pa/Pb" is smaller than the above-described range, on the other hand, the acicular texture is in an excessively grown state, so that, upon formation of a seamless can from the resin-coated aluminum sheet by drawing and ironing or the like, the film is inferred to undergo a cohesive failure upon processing. As a consequence, fractures (interstices) occur in the film, and the content liquid penetrates there, so that corrosion under the resin layer, which is called under-film corrosion (UFC), is prone to occur, leading to a deterioration in corrosion resistance.

In this embodiment, the thickness (film thickness) of the surface treatment layer 20 is preferably 2 nm or greater in the case of a seamless can from the viewpoint of the resin adhesiveness of the resin-coated aluminum seamless can 100. On the other hand, the upper limit of the thickness of the surface treatment layer 20 is preferably smaller than 100 nm from the viewpoint of the color tone and corrosion resistance. The optimal thickness of the surface treatment layer 20 depends on the intended can shape or the like, and is more preferably 5 nm or greater but smaller than 100 nm, still more preferably 8 to 90 nm, particularly preferably 10 to 80 nm, and most preferably 12 to 45 nm. If the film thickness is greater than the above-described range, the color tone and corrosion resistance may deteriorate, but if smaller, the resin adhesiveness may deteriorate.

If the seamless can is a drawn and ironed can, it has been formed from the resin-coated aluminum sheet by drawing and ironing as will be mentioned below, so that the thickness of the surface treatment layer located at a can barrel portion has become small by the processing like the aluminum base material, and the thickness of the surface treatment layer at a central portion of a can barrel (a portion most thinned near a central portion in a height direction) is suitably a thickness of 20% to 85%, preferably 20% to 75%, more preferably 20% to 60%, still more preferably 20% to 50%, particularly preferably 30% to 45%, and most preferably 30% or greater but smaller than 40% of the thickness of the surface treatment layer at a central portion of a can bottom. It is to be noted that the thickness of the surface treatment layer at the central portion of the can bottom is more preferably 5 nm or greater but smaller than 100 nm, still more preferably 8 to 90 nm, particularly preferably 10 to 80 nm, and most preferably 12 to 45 nm.

It is to be noted that, in this embodiment, a known method can be applied as a measuring method for the thickness of the surface treatment layer 20. As an example of the measuring method for the thickness of the surface treatment layer 20, X-ray photoelectron spectroscopy (XPS), time-of-flight secondary ion mass spectroscopy (TOF-SIMS), or the like can be applied, with TOF-SIMS being particularly desired.

TOF-SIMS is a method that performs a mass analysis by irradiating a solid specimen at a surface thereof with a primary ion beam from a primary ion gun and mass-separating secondary ions, which are released by sputtering from the surface of the specimen, with use of their flight time differences (the time of flight is proportional to the square root of the mass).

Here, the concentration distribution of an element, which is to be detected, in a depth direction of the surface of the specimen can be found by detecting the intensity of secondary ions while allowing sputtering to proceed and, with respect to time course data of the ion intensity of secondary ions, specifically, ions of an element to be detected or molecule ions connected to the element to be detected, converting course times into depths.

In this disclosure, etching is conducted using TOF-SIMS from the side of the surface of the surface treatment layer 20 (from the side of the surface opposite to the aluminum base material) until the aluminum base material is reached, and the depth at which the intensity of secondary ions of metal aluminum originated from the aluminum base material became a half of the maximum intensity (the intensity of secondary ions of metal aluminum when the aluminum base material is reached) is defined as the film thickness of the surface treatment layer. It is to be noted that the depth at that time is an $Al_2O_3$ equivalent depth.

The surface treatment layer 20 in this embodiment contains alumina monohydrate and alumina trihydrate as aluminum hydroxide as mentioned above. In addition, aluminum oxide ($Al_2O_3$) may also be contained as a compound other than those mentioned above. The surface treatment layer 20 in this embodiment may also contain extremely trace compounds that are present in a treatment solution, for example, silicon dioxide ($SiO_2$), magnesium oxide (MgO), manganese oxide (MnO), iron oxide (FeO), calcium oxide (CaO), phosphoric acid, and the like, to extents not impairing the performance.

<Resin Layer 30>

The resin layer 30 is directly or indirectly formed on the surface treatment layer 20 and on a side opposite to the aluminum base material 10. It is to be noted that, in this embodiment, a known adhesive layer (adhesion primer layer) or the like may exist between the surface treatment layer 20 and the resin layer 30.

As the material of the resin layer 30 in this embodiment, a known thermoplastic resin or thermosetting resin that is coated to metal base materials can be applied. As the thermoplastic resin, one or more kinds of resins including a polyolefin resin, a polyester resin, a polycarbonate resin, an acrylic resin, a polystyrene resin, an acrylonitrile-butadiene-styrene (ABS) resin, a polyamide resin, a fluorinated resin, a polyvinyl chloride resin, and the like can preferably be applied, for example. As the thermosetting resin, on the other hand, one or more kinds of resins including an acrylic resin, an unsaturated polyester resin, a phenolic resin, a urea resin, a polyurethane resin, a silicone resin, a polyimide resin, a melamine resin, an epoxy resin, and the like can preferably be applied, for example. As the material of the resin layer 30, a thermoplastic resin is more preferred.

Among such thermoplastic resins, a polyolefin resin or a polyester resin and a blend of them can be applied more preferably.

As the polyolefin resin, one or more kinds of resins including a polyethylene resin, a polypropylene resin, an ethylene-propylene copolymer resin, a polyolefin resin modified with unsaturated carboxylic acid such as an ethylene-acrylic acid ester copolymer resin, and an ethylene-methacrylic acid ester copolymer resin, and an ethylene-methacrylic acid copolymer resin, an ionomer resin, and the like can preferably be applied, for example.

As the polyester resin, a polyester resin composed primarily of ethylene terephthalate units is preferred, for example. Specifically, the polyester resin may be a polyethylene terephthalate resin, and may also be a pure copolymer polyester which contains an acid component other than terephthalic acid in a proportion of 35 mol% or smaller based on the acid component and an alcohol component other than ethylene glycol in a proportion of 35 mol% or smaller based on the alcohol component, or a blend thereof. As the acid component other than terephthalic acid, isophthalic acid, naphthalenedicarboxylic acid, cyclohexanedicarboxylic acid, P-$\beta$-oxyethoxybenzoic acid, diphenoxyethane-4,4'-dicarboxylic acid, 5-sodium sulfoisophthalic acid, hexahydroterephthalic acid, succinic acid, adipic acid, sebacic acid, dodecanedioic acid, dimer acid, trimellitic acid, pyromellitic acid, and the like can be mentioned. As the alcohol component other than ethylene glycol, on the other hand, a glycol component such as propylene glycol, 1,4-butanediol, neopentyl glycol, 1,6-hexylene glycol, diethylene glycol, triethylene glycol, cyclohexanedimethanol, ethylene oxide adduct of bisphenol A, trimethylolpropane, or pentaerythritol can be mentioned. As a polyester resin other than those composed primarily of ethylene terephthalate units, examples may include a polyester resin composed primarily of butylene terephthalate units or a polyester resin composed primarily of ethylene naphthalate units and a blend of these polyester resins.

As the resin layer 30, a polyester resin can be applied more preferably, and one or more kinds of crystalline polyester resins including a polyethylene terephthalate resin, a polybutylene terephthalate resin, a polyethylene terephthalate resin with isophthalic acid copolymerized therewith, and a polybutylene terephthalate resin with isophthalic acid copolymerized therewith can particularly preferably be applied, with the polyethylene terephthalate resin with isophthalic acid copolymerized therewith being most preferred. More specifically, the resin layer 30 is desirably a crystalline polyester resin that contains 2 to 25 mol% of isophthalic acid and that is composed primarily of ethylene terephthalate units.

The resin layer 30 may be a multilayer resin layer. For example, a multilayer polyester resin layer of two or more layers in which isophthalic acid has been copolymerized at different ratios or the like can be used. More specifically, the resin layer 30 may include a bottom layer, in which a relatively large amount of isophthalic acid has been copolymerized, and a surface layer, in which a relatively small amount of isophthalic acid has been copolymerized. More specifically, the bottom layer can be a polyester resin that contains 1 to 20 mol% of isophthalic acid and that is composed primarily of ethylene terephthalate units, and the surface layer can be a polyethylene terephthalate resin, or a polyester resin that contains isophthalic acid in a proportion of 15 mol% or smaller, preferably isophthalic acid in a proportion of 1 to 10 mol%, and that is composed primarily of ethylene terephthalate units. It is to be noted that, in this case, the bottom layer is a layer closer to the aluminum base material 10 and the surface layer is a layer relatively farthest from the aluminum base material 10 compared with the bottom layer. Further, in this case, the thickness ratio (layer ratio) of the surface layer to the bottom layer is preferably in a range of surface layer:bottom layer = 20:1 to 1:20 and more preferably in a range of surface layer:bottom layer = 10:1 to 1:10.

Further, the resin layer 30 may also be a resin layer in which a plurality of different resins has been blended. For example, a resin layer in which an ionomer resin, an ethylene-propylene copolymer resin, or a polyolefin resin modified with unsaturated carboxylic acid has been blended with a polyethylene terephthalate resin, a resin layer in which a polyethylene terephthalate resin or a polyethylene terephthalate resin copolymerized with isophthalic acid and a polybutylene terephthalate resin have been blended, or the like can also be applied. In the case of the resin in which the polyethylene terephthalate resin or the polyethylene terephthalate resin copolymerized with isophthalic acid and the polybutylene terephthalate resin have been blended, preferred is one in which the polybutylene terephthalate resin has been blended in a range of 10% to 50% with the polyethylene terephthalate resin or the polyethylene terephthalate resin copolymerized with isophthalic acid.

A thermoplastic resin such as the above-described crystalline polyester resin may be one to be laminated onto the aluminum base material after formation of a film, or may be one to be subjected to direct lamination that extrudes the heated and melted thermoplastic resin into a film form through a slit, which has a narrow extrusion width, of an extruder and then directly laminates it onto the aluminum base material. If the above-described film is laminated after its formation, the above-described film is not particularly limited to any kind, and may be, for example, an unstretched film, a uniaxially stretched film, or a biaxially stretched film.

To the resin layer 30, known resin additives, for example, an antiblocking agent such as amorphous silica, an inorganic filler such as calcium carbonate, magnesium carbonate, talc, or glass, a variety of fibers such as glass fibers, carbon fibers, or aramid fibers, an antistatic agent, an antioxidant such as tocopherol, an ultraviolet absorber, and the like can be added according to known methods.

Further, the resin layer 30 made of the thermoplastic resin may be one formed on the surface treatment layer 20 via a conventionally known adhesion primer layer such as a layer of an epoxy phenol type or a layer of a polyester phenol type. The adhesion primer layer exhibits excellent adhesiveness to both the surface treatment layer and the resin layer. By arranging the adhesion primer layer on the side of the inner surface of the seamless can, it is possible to suppress occurrence of a metal exposure and exhibit excellent impact resistance (dent resistance) even if the can body forms an indentation (dent) by an external impact such as falling and defects (cracks) occur in the resin layer. This makes it possible to prevent occurrence of corrosion at the dent portion even if contents to be filled are a highly-corrosive acidic beverage or the like. From the viewpoint of adhesiveness and dent resistance, the adhesion primer of the epoxy phenol type is preferably formed from a coating formulation particularly containing an epoxy resin and a phenolic resin at a weight ratio of 50:50 to 99:1, especially a weight ratio of 60:40 to 95:5. From the viewpoint of adhesiveness and dent resistance, the adhesion primer of the polyester phenolic type is preferably formed from a coating formulation particularly containing a polyester resin and a phenolic resin at a weight ratio of 50:50 to 99:1, especially a weight ratio of 60:40 to 95:5. In general, the above-described adhesion primer layer may be arranged with a thickness of 0.1 to 10 $\mu$m.

If the resin layer 30 is a crystalline resin such as polyethylene terephthalate, it is preferred, but not essential, to contain oriented crystals thereinside. Described specifically, if the resin-coated aluminum seamless can 100 is a drawn and ironed can, the resin layer 30 at the can barrel portion is imparted with processing-induced orientation in a drawing and ironing step, so that oriented crystals are formed inside the resin layer 30. On the other hand, the resin layer 30 at the can bottom portion is low in the extent of processing-induced orientation imparted in the drawing and ironing step, and therefore, the amount of oriented crystals is relatively smaller compared with the can barrel portion.

If the resin-coated aluminum seamless can 100 is a drawn and ironed can as described above, the amount of oriented crystals contained in the resin layer 30 is preferably greater at the can barrel portion than at the can bottom portion. It is to be noted that presence or absence of oriented crystals inside the resin layer 30 and their amount can be confirmed by a known method such as a peak intensity using X-ray diffractometry. In the case where a resin layer formed from a crystalline resin such as polyethylene terephthalate is formed on the side of the inner surface of the resin-coated seamless can of this embodiment, it is preferred that the X-ray diffraction intensity ratio (R) = $I_{(100)}/I_{(1-10)}$ of an X-ray diffraction intensity $I_{(100)}$ from (100) planes parallel to the surface of the resin layer 30 on the side of the inner surface to an X-ray diffraction intensity $I_{(1-10)}$ from (1-10) planes parallel to the surface of the resin layer 30 on the side of the inner surface be 1.8 or greater at the can barrel portion but smaller than 1.8 at the can bottom portion. Described specifically regarding this feature, the X-ray diffraction intensity ratio (R) of the resin layer on the side of the inner surface of the can barrel portion characterizes the orientation structure of crystals toward the film plane, and plane orientation toward the film plane is exhibited as the X-ray diffraction intensity from the (100) planes becomes greater relative to the X-ray diffraction intensity from the (1-10) planes.

If the resin-coated seamless can of this embodiment is a drawn and ironed can, the X-ray diffraction intensity ratio (R) of the resin layer of the crystalline resin such as polyethylene terephthalate on the inner surface of the can barrel portion is 1.8 or greater, more preferably 2.2 or greater, still more preferably 2.4 or greater, and particularly preferably 2.6 or greater, and the (100) planes are preferably plane-oriented. This makes it possible to form oriented crystals to a certain extent or greater in the can height direction inside the resin layer by drawing, thinning and drawing, and/or ironing, so that effects of suppressing corrosion under the resin layer, which is called UFC, when the seamless can is filled with acidic contents and also enhancing the impact resistance (dent resistance) of the resin layer can be obtained. In addition, when the can is stored as a canned product, it is possible to prevent adsorption of flavor ingredients of the contents on the resin layer and suppress changes in the flavor of the contents. If the X-ray diffraction intensity ratio (R) at the can barrel portion is smaller than 1.8, on the other hand, UFC is prone to occur, and the corrosion resistance decreases. Moreover, the impact resistance (dent resistance) also decreases, so that such an X-ray diffraction intensity ratio (R) at the can barrel portion is not preferred.

If the resin-coated seamless can of this embodiment is a drawn and ironed can, the X-ray diffraction intensity ratio (R) of the resin layer at the can bottom portion is desirably smaller than 1.8. In other words, the state of orientation in the resin layer at the can bottom portion represents a state of orientation similar to that of the resin layer that has not yet been processed, so that the state of orientation in the resin layer at the can bottom portion is desirably a state substantially close to unorientation in order to follow the severe processing of the can barrel portion. At the can bottom portion, the degree of processing is not severe, and the can bottom portion is retained substantially in the form of the resin-coated aluminum sheet that has not yet been processed. Corrosion resistance and impact resistance can therefore be satisfied despite a state close to unorientation.

If the resin-coated aluminum seamless can 100 is a drawn can, on the other hand, the extent of processing-induced orientation imparted to the resin layer 30 is not much different between the can barrel portion and the can bottom portion. Therefore, the amount of oriented crystals contained in the resin layer 30 is substantially the same between the can barrel portion and the can bottom portion.

The thickness of the resin layer 30 is not limited to any particular thickness, and can be set to a thickness similar to that of known seamless cans. More specifically, the thickness of the resin layer 30 is preferably in a range of 0.5 to 200 $\mu$m,

more preferably in a range of 1 to 40 μm, still more preferably in a range of 2 to 30 μm, and particularly preferably in a range of 5 to 20 μm. If the seamless can is a drawn and ironed can, it is suitable that the thickness of the resin layer at the central portion of the can barrel (the portion most thinned near the central portion in the can height direction) be 20% to 85%, preferably 20% to 75%, more preferably 20% to 60%, still more preferably 20% to 50%, particularly preferably 30% to 45%, and most preferably 30% or greater but smaller than 40% of the thickness of the resin layer 30 at the central portion of the can bottom. It is to be noted that the thickness of the resin layer 30 at the central portion of the can bottom is preferably in the range of 0.5 to 200 μm, more preferably in the range of 1 to 40 μm, still more preferably in the range of 2 to 30 μm, and particularly preferably in the range of 5 to 20 μm.

Concerning the thickness of the resin layer 30, on the other hand, if the resin-coated aluminum seamless can 100 is a drawn and ironed can, the thickness of the resin layer 30 at the can barrel portion is relatively thinner than that of the resin layer 30 at the can bottom portion. This is because the can side wall portion is thinned as a whole in the drawing and ironing step.

If the resin-coated aluminum seamless can 100 is a drawn can, on the other hand, the resin layer 30 at the can barrel portion is compressed in a thickness direction by a die in a drawing step. If the resin-coated aluminum seamless can 100 is the drawn can, the thickness of the resin layer 30 is relatively greater at the can barrel portion than at the can bottom portion.

In this embodiment, the resin-coated aluminum seamless can 100 preferably has a lightness L* value of 85 or greater on the outer surface of the can. Further, it is to be noted that, in this embodiment, the lightness L* value can be measured using a spectrophotometer in accordance with JIS Z 8781-4:2013. When the lightness L* value is measured, the can barrel portion of the resin-coated aluminum seamless can 100 is cut off and flattened, and the lightness L* value can be measured and evaluated at a portion around a can height of 60 mm and in a 0° rolling direction. It is to be noted that, in this embodiment, if a print is applied on the resin layer of the outer surface of the seamless can or the resin layer itself is colored or has low transparency, the lightness L* value of the outer surface of the can is desirably measured in a state in which the outer surface has only the aluminum base material and the surface treatment layer after the resin layer 30 has been removed by a known method.

The lightness L* value of the outer surface of the can is preferably 85 or greater, more preferably 86 or greater, and still more preferably in a range of 87 to 92.

On the other hand, the lightness L* value of the outer surface of the can when measured in the state in which the outer surface has only the aluminum base material and the surface treatment layer after the resin layer 30 has been removed by the known method is preferably 86 or greater, more preferably 87 or greater, and still more preferably in a range of 88 to 93.

Values of chromaticity a* and chromaticity b* at the outer surface of the resin-coated aluminum seamless can 100 are not limited to any particular values, but are each desired to fall in a range of preferably -5 or greater but 5 or smaller and more preferably -3 or greater but 3 or smaller.

In this embodiment, the resin-coated aluminum seamless can 100, on the side of the outer surface, has a color difference (ΔE) of preferably smaller than 5, more preferably smaller than 4, and still more preferably smaller than 3 from a reference can free of the surface treatment layer 20.

The color difference (ΔE) is an index expressed using the L*a*b* color system specified in JIS Z8730:2009, and is an index calculated by the following formula based on the difference in the International Commission on Illumination (CIE) lightness L* and the difference in the chromaticity a* and the chromaticity b* between two object colors. Lightness, chromaticity, and the color difference can be measured using a colorimeter or the like.

An example of a specific calculation method of the color difference (ΔE) in this embodiment is as will be described below. The can barrel portion of the resin-coated aluminum seamless can 100 is cut off and flattened, and lightness (L* value) and chromaticity (a* value and b* value) on the side of the outer surface are measured at a portion around the can height of 60 mm and in the 0° rolling direction. In addition, on a can (reference sample) that has been manufactured similarly but does not have the surface treatment layer 20, lightness (L* value) and chromaticity (a* value and b* value) are similarly measured. Using the following formula (1), the color difference (ΔE) between the resin-coated aluminum seamless can 100 and the reference sample is then calculated.

$$\Delta E = ((\Delta L^*)^2 + (\Delta a^*)^2 + (\Delta b^*)^2)^{1/2} \cdots (1)$$

$$\Delta L^* = L^*_1 - L^*_0, \quad \Delta a^* = a^*_1 - a^*_0, \quad \Delta b^* = b^*_1 - b^*_0$$

$\Delta L^*$: change in L* value, $L^*_0$: L* value of the reference sample, $L^*_1$: L* value of this embodiment
$\Delta a^*$: change in a* value, $a^*_0$: a* value of the reference sample, $a^*_1$: a* value of this embodiment
$\Delta b^*$: change in b* value, $b^*_0$: b* value of the reference sample, $b^*_1$: b* value of this embodiment

<Manufacturing Method of Resin-coated Aluminum Seamless Can>

A description will hereinafter be made regarding a manufacturing method of the resin-coated aluminum seamless can 100. It is to be noted that the manufacturing method described here in this embodiment is merely one example and shall not be limited to this method.

The manufacturing method of the resin-coated aluminum seamless can 100 includes at least (I) a manufacturing step of a resin-coated aluminum sheet and (II) a canmaking step of forming the obtained resin-coated aluminum sheet into a seamless can.

Concerning (II) the canmaking step of forming into the seamless can will hereinafter be described in detail. It is to be noted that (I) the manufacturing step of the resin-coated aluminum sheet will be described subsequently herein. As a forming method applied in the canmaking step, a known forming method can be applied. An example of the known forming method is described bellow. The resin-coated aluminum sheet is punched into predetermined shapes and dimensions, and is then formed into various types of containers by press molds. As the forming method, conventionally-known processing methods such as drawing, drawing and redrawing, drawing and ironing, drawing and deep drawing, drawing and bending-stretching, or ironing can be applied, and in this embodiment, drawing and ironing is particularly preferred. As the resin-coated aluminum sheet for use in this embodiment is excellent in the adhesiveness between the resin layer and the surface treatment layer, a seamless can that is formed by severe processing such as drawing, drawing and deep drawing, drawing and ironing, drawing and bending-stretching, or ironing can be formed without causing tear-off or peel-off of the resin layer at a flange-forming portion. Further, the use of the resin-coated aluminum sheet with the resin layer 30 formed beforehand on the surface thereof in this embodiment makes it possible to lower the friction coefficient of the surface to a working tool, so that processing under dry conditions without use of a coolant (cooling and lubricating agent) is possible. In addition, it is possible to realize the manufacture of containers with a low environmental load, such as a reduction in the usage of rinse water in a container manufacturing step and omission of coating and baking steps which would otherwise be conducted after the formation of containers.

In the canmaking step of forming the seamless can of this embodiment, the can barrel portion of the seamless can is preferably thinned such that the central portion of the can barrel has a thickness of 20% to 85%, preferably 20% to 75%, more preferably 20% to 60%, still more preferably 20% to 50%, even still more preferably 25% to 45%, and most preferably 30% to 40% of the thickness of the can bottom portion by bending and stretching through drawing and redrawing, drawing and ironing, or the like of the resin-coated aluminum sheet. If the thickness is greater than the above-described range, it has been unable to sufficiently achieve the thinning, thereby failing to obtain full satisfaction in economy. If the thickness is smaller than the above-described range, on the other hand, the resin layer cannot follow the processing, leading to a possible metal exposure.

In the canmaking step of forming into the seamless can of this embodiment, it is desired to eliminate residual stress occurring in the resin layer through the processing, by subjecting the resulting seamless can to at least one step of heat treatment. The elimination of the residual stress in the resin layer makes it possible to improve the adhesiveness between the resin layer and the surface treatment layer after the processing and, at the same time, also makes it possible to thermally fix oriented crystals in the can barrel portion if the resin layer is a crystalline resin such as polyethylene terephthalate. In general, this heat treatment is preferably conducted in a temperature range of Tg+50°C or higher, particularly Tg+100°C to the melting point(Tm)-5°C based on the glass transition point (Tg) of the resin layer. On a lower temperature side than the above-described temperature range, relaxation of the residual stress in the resin layer tends to be insufficient, lowering processability for post-processing such as necking. On a higher temperature side than the above-described temperature range, on the other hand, the oriented crystals formed during the can forming highly tends to be caused to melt, thereby raising a problem that the corrosion resistance, impact resistance (dent resistance) and the like of the can barrel portion decreases. It is to be noted that, if the resin layer is a multilayer of two or more layers, the heat treatment is preferably conducted in such a manner as to bring the resin layer in the lowermost layer into the above-described temperature range. By this heat treatment, the heat resistance of the resin layer is improved and, at the same time, the adhesiveness to the aluminum base material is also improved, and further, processability for post-processing such as necking and flanging or the corrosion resistance, impact resistance (dent resistance), and flavor properties are also improved.

<Resin-coated Aluminum Sheet>

A description will hereinafter be made regarding a resin-coated aluminum sheet 300 usable for the manufacture of the resin-coated aluminum seamless can 100. FIG. 3 is a view schematically depicting the resin-coated aluminum sheet 300 according to this embodiment. As depicted in FIG. 3, the resin-coated aluminum sheet 300 includes an aluminum base material 10', a surface treatment layer 20' formed on at least one side of the aluminum base material 10', and a resin layer 30' formed on the surface treatment layer 20'. The resin-coated aluminum sheet 300 depicted in FIG. 3a has the surface treatment layer 20' and the resin layer 30' on one side thereof, but this disclosure is not limited thereto, and as depicted in FIG. 3b, the resin-coated aluminum sheet may be a resin-coated aluminum sheet 310 having the surface treatment layer 20' and the resin layer 30' on both sides of the aluminum base material 10'. The aluminum base material 10', the surface treatment layer 20', and the resin layer 30' correspond to the aluminum base material 10, the surface treatment layer 20, and the resin layer 30, respectively, included in the above-described resin-coated aluminum seamless can 100. Therefore, only the differences will hereinafter be described, and a description of the common configurations is omitted.

In this embodiment, the thickness of the surface treatment layer 20' is preferably 2 nm or greater from the viewpoint of resin adhesiveness. On the other hand, the upper limit of the thickness of the surface treatment layer 20' is preferably smaller than 100 nm from the viewpoint of the color tone and corrosion resistance. The optimal thickness of the surface treatment layer 20' depends on the intended can shape or the like, and is more preferably 5 nm or greater but smaller than 100 nm, still more preferably 8 to 90 nm, particularly preferably 10 to 80 nm, and most preferably 12 to 45 nm.

On the other hand, the thickness of the resin layer 30' is not limited to any particular thickness in this embodiment, but is preferably in the range of 0.5 to 200 $\mu$m, more preferably in the range of 1 to 40 $\mu$m, and still more preferably in a range of 2 to 20 $\mu$m. In general, the thicker the resin layer, the higher the corrosion resistance, but resin adhesiveness decreases, so that there is an optimal thickness range according to the application.

It is to be noted that the above-mentioned Pa/Pb ratio does not change by forming processing such as drawing and ironing. Therefore, the Pa/Pb ratio of the surface treatment layer 20' in the resin-coated aluminum sheet 300 is characterized to be 0.13 to 3.00, as with the resin-coated aluminum seamless can 100.

If the resin layer 30' of the resin-coated aluminum sheet 300 is a crystalline resin such as polyethylene terephthalate in this embodiment, the crystalline resin is preferably unoriented from the viewpoint of processing followability because, in this case, the resin layer 30' is excellent in drawing and thinning-drawing forming and/or ironing processing, the can barrel portion can be highly thinned, and the height of the seamless can can readily be made great.

<Manufacturing Method of Resin-coated Aluminum Sheet>

Next, a description will hereinafter be made regarding a manufacturing method of the resin-coated aluminum sheet 300 ((I) the manufacturing step of the resin-coated aluminum sheet, which has been mentioned above) in this embodiment. It is to be noted that the manufacturing method presented here in this embodiment is merely an illustrative one and that the manufacturing method shall not be limited to this method.

The manufacturing method of the resin-coated aluminum sheet in this embodiment includes a surface treatment step of forming, on the aluminum base material 10', the surface treatment layer 20' that contains aluminum hydroxide and a resin coating step of forming the resin layer 30'. It is to be noted that the surface treatment step forms the surface treatment layer 20' such that the value of Pa/Pb is 0.13 to 3.00 when, in an infrared absorption spectrum measured by an FT-IR, the height of an absorbance peak at wavenumbers of 850 to 1000 cm$^{-1}$ originated primarily from Al-O stretching vibrations of amorphous alumina is defined as Pa and the height of an absorbance peak at wavenumbers of 1000 to 1200 cm$^{-1}$ originated primarily from Al-OH bending vibrations of aluminum hydroxide is defined as Pb.

There is no particular limitation on the surface treatment step if it is a step capable of setting the value of the above-described peak ratio Pa/Pb to 0.13 to 3.00. Examples include a method that immerses the aluminum base material 10' in a solution (treatment agent) of which the pH is 6 to 13 at 20°C to 100°C and keeps it in contact with the solution for 0.1 to 30 seconds, a method that brings the aluminum base material 10' into contact with steam (treatment agent) of 100°C to 140°C and keeps it in the steam for 0.1 to 120 seconds, and the like.

That is, as a treatment agent for the above-described surface treatment, the solution of 20°C to 100°C, steam of 100°C to 140°C, or the like can be used. As the temperature of the treatment agent is higher, the surface treatment layer 20' can be formed in a shorter period of time.

When the aluminum base material 10' is treated by being immersed in the solution (treatment agent), a solution of which the pH is in a range of 6 to 13 as the pH of the treatment agent can be applied. Substantially no aluminum hydroxide is formed in an acidic solution of less than pH 6, and stable formation of the film is possible in water of pH 7 or higher or an alkali solution of pH 8 to pH 13.

The reason that an alkali is used in the surface treatment solution is to dissolve a naturally formed oxide film, which exists on the surfaces of the aluminum base material before the treatment, in an extremely short period of time. In general, a native oxide film on an aluminum base material is a film made primarily of aluminum oxide, and can be dissolved in an extremely short period of time in an alkali solution. However, as the pH of the solution becomes higher, the proportion of amorphous alumina in the surface treatment layer 20' increases. A more preferred pH range is therefore pH 8 to pH 10.

As the surface treatment solution for use in the above-described surface treatment step, pure water can preferably be used. Deionized water having an electrical conductivity of 10 $\mu$S/cm or lower may also be used. The reason that pure water or deionized water is preferred is that the higher the phosphorus concentration, calcium concentration, silicon concentration, magnesium concentration, and iron concentration in the surface treatment solution are, the higher the proportion of amorphous alumina to be contained in the surface treatment layer 20' becomes. If any one of the phosphorus concentration, calcium concentration, silicon concentration, magnesium concentration, and iron concentration exceeds 1 ppm, the proportion of amorphous alumina to be contained in the surface treatment layer 20' abruptly increases. It is hence preferred to control the concentrations of these elements to 1 ppm or lower, with 0.1 ppm or lower being more preferred.

If the surface treatment solution for use in the above-described surface treatment step is alkaline (pH 8 to pH 13), an aqueous sodium carbonate solution, an aqueous sodium aluminate solution, an aqueous sodium hydroxide solution, an aqueous potassium hydroxide solution, or the like is preferably used. It is to be noted that, as water for use in the alkali solution, the above-mentioned pure water or deionized water is preferred.

As a specific example in the case that uses gas as the treatment agent, steam or superheated steam can be applied. In this case, the temperature of steam is preferably 100°C to 140°C. On the other hand, the temperature of superheated steam is preferably 120°C to 350°C. As the temperature is higher, the surface treatment layer 20' can be formed according to the application by treatment in a shorter period of time. In the case of superheated steam, there is a need for a process that dries the aluminum base material 10' in a superheated steam oven by feeding the aluminum base material 10' in a state in which the surface of the aluminum base material 10' becomes wet by condensation at the surfaces thereof at the moment of being fed into the superheated steam oven or the aluminum base material 10' is fed in a pre-wetted state, because the film that contains aluminum hydroxide is swiftly formed at a timing when water on the surfaces of the aluminum base material vaporizes.

In the manufacturing method in this embodiment, a pre-treatment step may be included before the above-described surface treatment step. The pre-treatment step is conducted as a step that removes the native oxide film existing on the surfaces of the aluminum base material 10'. Specifically, as the pre-treatment step, immersion treatment or cathodic electrolytic treatment can be conducted using an alkali solution. Here, as specific examples of immersion treatment conditions, it is possible to set the alkali solution to pH 8 to pH 13, the solution temperature to 20°C to 90°C, and the immersion time to 0.1 to 10 seconds. As specific examples of cathodic electrolytic treatment conditions, on the other hand, it is possible to set the alkali solution to pH 8 to pH 13, the solution temperature to 20°C to 90°C, the cathodic electrolysis time to 0.1 to 10 seconds, and the current density to 1 to 10 A/dm$^2$. By the above-described pre-treatment, the native oxide film existing on the surfaces of the aluminum base material is removed, and at the same time, localized dissolution of the aluminum base material is suppressed, so that a more homogeneous surface treatment layer 20' can be formed with aluminum hydroxide contained therein. Especially from the viewpoint of homogenization of the surface treatment layer 20', cathodic electrolytic treatment is preferred than immersion treatment because the native oxide film can more evenly be removed.

Further, known degreasing treatment may also be applied, as surface cleaning for removing rolling oil, rust preventive oil, and the like, as needed before the above-described pretreatment step. No particular limitation is imposed on a degreasing agent, and a known degreasing agent such as an organic solvent-based degreasing agent or an acidic or alkaline aqueous degreasing agent can be used.

Next, as the resin coating step, a method that forms a resin layer 30' on the surface treatment layer 20' formed as described above, for example, can be mentioned. The formation of the resin layer 30' can be conducted by a desired method. In the case where the resin layer 30' is a thermoplastic resin, examples include a method that laminates resin which is in a molten state directly on the surface-treated aluminum sheet, a method that thermocompression-bonds resin which has been processed into the form of a film on a different line to the surface-treated aluminum sheet which has been heated on a lamination line, and the like. In addition, with a purpose of enhancing dent resistance, an adhesion primer layer may be formed between the surface treatment layer 20' and the resin layer 30'. It is to be noted that the adhesion primer layer may be arranged beforehand on the surface treatment layer on the surface-treated aluminum sheet or may be arranged beforehand on a resin layer such as a thermoplastic resin film. In the case where the resin layer 30' is a thermosetting resin, a method that applies the resin by a roll coater and then dries it in an oven, a method that coats the resin by spraying and then dries it in an oven, and the like are applicable.

<Examples>

This disclosure will hereinafter be described more specifically by providing Examples. First, measurement methods in Examples will be described.

[Calculation of Absorbance Peak Ratio (Pa/Pb)]

The absorbance in the infrared absorption spectrum of the surface treatment layer 20 of the resin-coated aluminum seamless can 100 was calculated from the surface-treated aluminum sheet with use of an FT-IR by a high-sensitivity reflection method (RAS method) under the following conditions. A gold-evaporated mirror was used as a background. Only parallel polarized light was detected using a polarizer.

Instrument: "FTIR-6600 type A" manufactured by JASCO Corporation

Measurement conditions:

Measurement method: RAS method
Accessories used: "Advanced Grazing Angle" manufactured by PIKE Technologies, Inc.
Detector: mercury cadmium telluride (MCT) detector
Wavenumber resolution: 4 cm$^{-1}$
Accumulation count: 64
Measurement temperature: room temperature
Measurement atmosphere: air
Measurement wavenumber range: 4000 to 500 cm$^{-1}$

Measurement of absorbance peaks was conducted on a surface-treated aluminum sheet. First, as illustrated in FIG. 4, the absorbance at number 1200 cm$^{-1}$ and the absorbance at wavenumber 850 cm$^{-1}$ in an infrared absorption spectrum were connected by a straight line, and the straight line was used as a baseline. Then, as a peak originated from Al-0 stretching vibrations of amorphous alumina, a point highest from the baseline in the range of wavenumbers 850 to 1000 cm$^{-1}$ was taken as an absorbance peak height Pa. Further, as a peak originated from Al-OH bending vibrations of aluminum hydroxide, a point highest from the baseline in the range of wavenumbers 1000 to 1200 cm$^{-1}$ was taken as an absorbance peak height Pb. The absorbance peak ratio (Pa/Pb) was calculated from the measured Pa and Pb. The absorbance peak heights Pa and Pb are presented together with the calculated absorbance peak ratio (Pa/Pb) in Table 1. It is to be noted that the absorbance peak ratio value obtained by the above-mentioned measurement method coincides with the value of an absorbance peak ratio value obtained by measurement after removing the resin layer 30 by a known method in the resin-coated aluminum seamless can 100. An example of measurement of the value of an absorbance peak ratio from the resin-coated aluminum seamless can 100 will hereinafter be presented.

To a 350 mL drawn and ironed can (resin-coated aluminum seamless can) obtained from a resin-coated aluminum sheet of Example 4 prepared by a method (ii) to be mentioned below, heat treatment was applied at 200°C for 90 seconds with use of an oven. Next, a can wall portion at a can height of 60 mm was cut off in 6 cm × 6 cm, and the resin layers 30 on inner and outer surfaces were removed by a known method, whereby the can wall portion thus cut off was brought into the state of having only the aluminum base material 10 and the surface treatment layer 20. After that, the absorbance peaks and absorbance peak ratio were measured by the above-mentioned method. As a result, Pa was 0.0045, Pb was 0.030, and Pa/Pb was 0.15.

[Calculation of Film Thickness of Surface Treatment Layer]

Calculation of the film thickness of the surface treatment layer was conducted under the following conditions from the surface-treated aluminum sheet with use of a time-of-flight secondary ion mass spectrometer (TOF-SIMS). Mass analysis was conducted on the film constituent components while soft-etching is repeatedly conducted at a constant speed from the surface side of the surface treatment layer of the surface-treated aluminum sheet with use of a cesium (Cs) ion gun. Etching was conducted until the aluminum base material was reached, and the depth at which the secondary ion intensity of metallic aluminum derived from the aluminum base material decreased to a half of the maximum intensity (secondary ion intensity of the metallic aluminum when the soft etching reached the aluminum base material) was taken as the film thickness of the surface treatment layer. It is to be noted that the depth is the depth in terms of alumina.

Instrument: "TOF.SIMS 5" manufactured by IONTOF GmbH.
Measurement conditions:

Primary ion species: Bi
Etching gun type: Cs
Measurement area: 50 μm × 50 μm

[Retort Adhesion Evaluation]

Regarding the resin adhesiveness under a wet environment, test and evaluation were conducted by the following method using a drawn and ironed can (resin-coated aluminum seamless can) obtained from a resin-coated aluminum sheet prepared by the below-mentioned method (i). First, at a height position of 90 mm from a can bottom on an outer surface of the prepared 350 mL drawn and ironed can, a cut was formed in a film (resin layer) by a utility knife. With the can immersed in tap water, it was placed in a retort oven and subjected to retort treatment at 125°C for 45 minutes. The maximum film peel length on a lower side of the portion of the unloaded can at which the cut had been formed by the utility knife was measured and evaluated as follows.

A: Film peel length of 10 mm or shorter
B: Film peel length of longer than 10 mm but 20 mm or shorter
C: Film peel length of longer than 20 mm but 30 mm or shorter
D: Film peel length of longer than 30 mm

[Color Tone Evaluation]

A can barrel portion of a 350 mL drawn and ironed can (resin-coated aluminum seamless can) obtained from a resin-coated aluminum sheet prepared by the below-mentioned method (ii) was cut off and flattened. On the side of an outer surface, the color tone of a portion around a can height of 60 mm and in the 0° rolling direction was measured. As a measuring instrument, a portable integrating sphere spectrophotometer "Ci64" manufactured by X-Rite, Incorporated. was used. Specifically, lightness (L* value) and chromaticity (a* value and b* value) were first measured, and a color difference (ΔE) between the drawn and ironed can and a reference sample (Comparative Example 1) was then calculated using the following formula (1).

$$\Delta E = ((\Delta L^*)^2 + (\Delta a^*)^2 + (\Delta b^*)^2)^{1/2} \ ... \ (1)$$

$$\Delta L^* = L^*_1 - L^*_0, \ \Delta a^* = a^*_1 - a^*_0, \ \Delta b^* = b^*_1 - b^*_0$$

$\Delta L^*$: change in L* value, $L^*_0$: L* value of Comparative Example 1, $L^*_1$: L* value of Example
$\Delta a^*$: change in a* value, $a^*_0$: a* value of Comparative Example 1, $a^*_1$: a* value of Example
$\Delta b^*$: change in b* value, $b^*_0$: b* value of Comparative Example 1, $b^*_1$: b* value of Example

Based on ΔE thus obtained, determination was made as follows.

A: ΔE was smaller than 3
B: ΔE was 3 or greater but smaller than 4
C: ΔE was 4 or greater but smaller than 5
D: ΔE was greater than 5

In 350 mL drawn and ironed cans (resin-coated aluminum seamless cans) obtained from resin-coated aluminum sheets of Examples 3, 4, and 5 prepared by the method (ii) to be mentioned below, can wall portions around a can height of 60 mm and in the 0° rolling direction were cut off in 6 cm × 6 cm and flattened. The resin layers 30 on outer surfaces were then removed by a known method, whereby the can wall portions were brought into the state of having only the aluminum base material 10 and the surface treatment layer 20. After that, lightness (L* values) of portions around the can height of 60 mm and in the 0° rolling direction were measured by the above-mentioned method. The results are presented below.

L* value of the drawn and ironed can of Example 3: 90.31
L* value of the drawn and ironed can of Example 4: 88.29
L* value of the drawn and ironed can of Example 5: 86.97

[Corrosion Resistance Evaluation]

To a 350 mL drawn and ironed can (resin-coated aluminum seamless can) obtained from a resin-coated aluminum sheet prepared by the below-mentioned method (ii), heat treatment was applied at 200°C for 90 seconds with use of an oven. On the side of an inner surface of a can barrel portion, the can barrel portion was then cut off in 4 cm × 4 cm at a position around a can height of 60 mm and in a 90° rolling direction, and was provided as a specimen. In the specimen, two crosscut scratches reaching a base material were formed by a utility knife in a direction of 45 degrees with respect to a rolling direction. With the specimen immersed in a corrosion model solution (aqueous solution of sodium chloride and anhydrous citric acid at mass concentrations of 1.0% and 0.5%, respectively), time was allowed to pass at 37°C for two weeks. After that, the specimen was taken out of the model solution, and with respect to the crosscut portions and their surroundings, the conditions of peeling of the film (resin layer) or discoloration due to occurrence of corrosion products were observed by a visual evaluation, and around the crosscut portions, the corrosion resistance was evaluated by the discoloration or the maximum width of film peeling as will be described below.

A: One having a maximum width of smaller than 1 mm per side
B: One having a maximum width of 1 mm or greater but smaller than 2 mm per side

C: One having a maximum width of 2 mm or greater but smaller than 3 mm per side
D: One having a maximum width of 3 mm or greater per side

[Dent Resistance Evaluation]

Using 350 mL drawn and ironed cans (resin-coated aluminum seamless cans) obtained from a resin-coated aluminum sheet prepared by the below-mentioned method (ii) and a resin-coated aluminum sheet prepared by the below-mentioned method (iii) and including an adhesion primer, evaluations were conducted by the following method. It is to be noted that, as a surface-treated aluminum sheet, a surface-treated aluminum sheet of Example 2 was used. First, after trimming of an opening end edge portion of each drawn and ironed can was conducted, heat treatment was applied at 200°C for 90 seconds with use of an oven. Necking and flanging were then conducted on an opening end. After that, 350 g of contents "Coca-Cola" (trademark) were filled, and a lid was seamed by a method known per se in the art. Subsequently, each of the cans was allowed to lie sideways, and a metal-made weight of 1 kg was vertically dropped from a height of 30 mm onto a lower surface portion (near a bottom portion) of a side wall of each can to give an indentation (dent). Subsequently, after each of the cans was stored at 37°C for 1.5 months with the lid directed upward, conditions of corrosion at the indented (dent) portion on the side of the inner surface of each can were visually observed, and dent resistance was observed. The results are presented below.

Drawn and ironed can of Example 2 (without adhesion primer): Corroded
Drawn and ironed can of Example 2 (with adhesion primer): Free of corrosion

[Calculation of X-ray Diffraction Intensity Ratio (R)]

To a 350 mL drawn and ironed can (resin-coated aluminum seamless can) obtained from a resin-coated aluminum sheet prepared by the below-mentioned method (ii), heat treatment was applied at 200°C for 90 seconds with use of an oven. Next, a can bottom portion was cut off in 3 cm × 3 cm at a center thereof, the aluminum base material was dissolved by a known method to leave only the inner-surface resin layer, and the inner-surface resin layer was fixed by a double-sided tape on a flat aluminum alloy sheet to provide a specimen for measurement. In addition, a can wall portion at a can height of 60 mm was cut off in 3 cm × 3 cm, the aluminum base material was dissolved by a known method to leave only the inner-surface resin layer, and the inner-surface resin layer was fixed by a double-sided tape on a flat aluminum alloy sheet to provide a specimen for measurement. Under the following measurement conditions, X-ray diffraction intensities from (100) planes and (1-10) planes were measured, and the X-ray diffraction intensity ratios $(R) = I_{(100)}/I_{(1-10)}$ at the can bottom portion and the can wall portion were calculated.

X-ray diffractometer: "RINT-2500," manufactured by Rigaku Corporation
X-ray: CuKα X-ray (wavelength $\lambda$ = 0.1542 nm)
Tube voltage: 45 kV
Tube current: 200 mA
Divergence slit: 1/2°
Receiving slit: 0.15 mm

As the X-ray diffraction intensity from the (100) planes, the maximum value confirmed in the range of $2\theta$ = 25.0 to 27.0° was used. Further, as the X-ray diffraction intensity from the (1-10) planes, the maximum value confirmed in the range of $2\theta$ = 22.0° to 24.0° was used. It is to be noted that the subtraction of background was conducted by the Sonneveld-Visser method.
To a drawn and ironed can of Example 1 using a resin-coated aluminum sheet and prepared by the above-mentioned method (ii), heat treatment was applied at 200°C for 90 seconds. After that, the X-ray diffraction intensity ratios $(R) = I_{(100)}/I_{(1-10)}$ of the inner-surface resin layers at a can bottom portion and a can wall portion were calculated. The X-ray diffraction intensity ratio (R) at the can bottom portion was 1.7, and the X-ray diffraction intensity ratio (R) at the can wall portion was 2.9.

(Example 1)

An aluminum base material of an A3104 alloy type, in an H19 temper, and with a sheet thickness of 0.27 mm was prepared. After rolling oil on the aluminum base material was degreased by a known method, the aluminum base material was immersed in a treatment solution (deionized water of 95°C) (surface treatment step). It is to be noted that the treatment time was set to 8 seconds. Water was squeezed off between rollers, followed by drying in a dryer to obtain a surface-treated aluminum sheet with surface treatment layers, which contained aluminum hydroxide, formed in the same manner on both sides thereof. The film thickness and absorption peak ratio (Pa/Pb) on the surface treatment layers of the surface-treated aluminum sheet thus obtained were calculated and are presented in Table 1.

Next, a resin layer was thermocompression-bonded on the surface treatment layers of the surface-treated aluminum sheet thus obtained, so that a resin-laminated sheet (resin-coated aluminum sheet) was prepared. Specifically, resin-laminated sheets were prepared by the following three methods (i) to (iii).

(i) On each side of the heated surface-treated aluminum sheet, a non-stretched two-layer polyethylene terephthalate film (20 μm thickness) was laminated, followed by immersion in water for quenching to obtain the resin-laminated sheet. It is to be noted that, as the two-layer polyethylene terephthalate film, a film with two layers including, as a surface layer, a layer of polyethylene terephthalate in which isophthalic acid (IA) had been copolymerized at 2 mol% and, as a bottom layer, another layer of polyethylene terephthalate in which isophthalic acid (IA) had been copolymerized at 15 mol%, the two layers being laminated at a layer ratio of 4:1, was used.

(ii) On each side of the heated surface-treated aluminum sheet, a stretched polyethylene terephthalate film was laminated, followed by immersion in water for quenching to obtain the resin-laminated sheet. It is to be noted that, on the side to be arranged on the side of the inner surface of the can, a polyethylene terephthalate film (19 μm thickness) in which isophthalic acid (IA) had been copolymerized at 11 mol% was used. On the side to be arranged on the side of the outer surface of the can, on the other hand, a stretched two-layer polyethylene terephthalate film (12 μm thickness) obtained by lamination of two layers including, as a surface layer, a layer of polyethylene terephthalate in which isophthalic acid (IA) had been copolymerized at 7.5 mol% and, as a bottom layer, another layer of polyethylene terephthalate in which isophthalic acid (IA) had been copolymerized at 15 mol%, the two layers being laminated at a layer ratio of 1:5, was used. It is to be noted that the films on the side of the inner surface and on the side of the outer surface after the lamination were confirmed to be in an unoriented state, by X-ray diffraction.

(iii) On each side of the heated surface-treated aluminum sheet, a stretched polyethylene terephthalate film was laminated, followed by immersion in water for quenching to obtain the resin-laminated sheet. It is to be noted that, on the side to be arranged on the side of the inner surface of the can, a film obtained by applying a 1 μm thickness of a polyester phenol-based adhesion primer beforehand to a side to be laminated of a polyethylene terephthalate film (19 μm thickness) in which isophthalic acid (IA) had been copolymerized at 11 mol% was used. On the side to be arranged on the side of the outer surface of the can, on the other hand, a stretched two-layer polyethylene terephthalate film (12 μm thickness) obtained by lamination of two layers including, as a surface layer, a layer of polyethylene terephthalate in which isophthalic acid (IA) had been copolymerized at 7.5 mol% and, as a bottom layer, another layer of polyethylene terephthalate in which isophthalic acid (IA) had been copolymerized at 15 mol%, the two layers being laminated at a layer ratio of 1:5, was used. It is to be noted that the films on the side of the inner surface and on the side of the outer surface after the lamination were confirmed to be in an unoriented state, by X-ray diffraction.

To each side of the resin-laminated sheet thus obtained, 50 g/m$^2$ of paraffin wax was applied, followed by punching with a blank diameter of 142 mm to make a cup preform. Using the canmaking machine ("Body Maker"), the cup preform was then processed into a 350 mL drawn and ironed can with a reduction rate of 65%.

Can body dimeter: 66 mm, approximately
Can body height: 130 mm, approximately
Thickness near central portion of can barrel relative to original sheet thickness (can bottom portion): 35%, approximately

On the drawn and ironed can thus obtained, a retort adhesion evaluation on the outer surface of the can, a color tone evaluation on the outer surface of the can, and a corrosion resistance evaluation on the inner surface of the can were conducted. The results of the individual evaluations were as presented in Table 1.

(Example 2 to Example 5)

The immersion time (treatment time) in the treatment solution in the surface treatment step was set as in Table 1. Except for this, the procedures of Example 1 were followed. The results are presented in Table 1.

(Comparative Example 1)

An aluminum base material of an A3104 alloy type, in an H19 temper, and with a sheet thickness of 0.27 mm was prepared. After rolling oil on the aluminum base material was degreased by the known method, evaluations similar to those in Example 1 were conducted without conducting surface treatment. The results are presented in Table 1. The film naturally formed after the degreasing was a film primarily of amorphous alumina, and the absorbance peak ratio (Pa/Pb) was 13.98.

The results are presented in Table 1.

(Comparative Examples 2 to 5)

The immersion time (treatment time) in the treatment solution in the surface treatment step was set as in Table 1. Except for this, the procedures of Example 1 were followed. The results are presented in Table 1.

(Reference Example)

Using an aluminum alloy sheet having chromate phosphate treatment films, formation and evaluations of a drawn and ironed can were conducted as in Example 1. The results are presented in Table 1.

[Table 1]

| | Treatment time (sec) | Measurement results of surface treatment layer | | | | Evaluation results | | | | | |
| --- | --- | --- | --- | --- | --- | --- | --- | --- | --- | --- | --- |
| | | Film thickness (nm) | Absorbance (Abs) peak Pa | Absorbance (Abs) peak | Pa/Pb ratio | Retort adhesion evaluation | | Color tone evaluation | | | Corrosion resistance evaluation |
| | | | | | | Peel length (mm) | Evaluation | L*value | ⌀E | Evaluation | Evaluation |
| Ex. 1 | 8 | 11.8 | 0.0171 | 0.0085 | 2.006 | 11.0 | B | 90.37 | 0.37 | A | A |
| Ex. 2 | 11 | 24.0 | 0.0189 | 0.0275 | 0.688 | 2.0 | A | 90.62 | 0.65 | A | A |
| Ex. 3 | 15 | 46.3 | 0.0226 | 0.0667 | 0.339 | 2.0 | A | 89.35 | 0.96 | A | B |
| Ex. 4 | 30 | 85.8 | 0.0228 | 0.1548 | 0.147 | 2.0 | A | 86.99 | 3.25 | B | C |
| Ex. 5 | 45 | 106.5 | 0.0283 | 0.2125 | 0.133 | 5.5 | A | 85.80 | 4.41 | C | C |
| Comp. Ex. 1 | 0 | 3.9 | 0.0106 | 0.0008 | 13.980 | 42.5 | D | 90.03 | Reference | A | D |
| Comp. Ex. 2 | 5 | 5.5 | 0.0152 | 0.0045 | 3.366 | 31.0 | D | 90.51 | 0.49 | A | A |
| Comp. Ex. 3 | 60 | 115.3 | 0.0307 | 0.2419 | 0.127 | 5.5 | A | 85.16 | 5.01 | D | C |
| Comp. Ex. 4 | 120 | 125.1 | 0.0321 | 0.2988 | 0.107 | 1.5 | A | 84.71 | 5.43 | D | C |
| Comp. Ex. 5 | 240 | 121.4 | 0.0201 | 0.3302 | 0.061 | 3.5 | A | 83.92 | 6.24 | D | D |
| Ref. Ex. | - | - | - | - | - | 25.5 | C | 88.99 | 1.25 | A | A |

From the above Examples and Comparative Examples, it was able to confirm that a resin-coated aluminum seamless can is improved to have both resin adhesiveness and a color tone on the outer surface of the can after having undergone retort treatment, by controlling the value of Pa/Pb of a surface treatment layer to 0.13 to 3.00. In addition, it was also able to confirm that a resin-coated aluminum seamless can having excellent corrosion resistance on the inner surface of the can as well is obtained by controlling the value Pa/Pb to 0.30 to 3.00.

[Industrial Applicability]

The resin-coated aluminum seamless cans of this disclosure are suited for such applications as beverage cans and beverage cups.

[Reference Signs List]

100: Resin-coated aluminum seamless can
10: Aluminum base material
20: Surface treatment layer
30: Resin layer

**Claims**

1. A resin-coated aluminum seamless can comprising:

   an aluminum base material;
   a surface treatment layer formed on at least one side of the aluminum base material; and
   a resin layer directly or indirectly formed on the surface treatment layer,
   wherein the surface treatment layer contains aluminum hydroxide, and has a Pa/Pb value of 0.13 to 3.00 when, in an infrared absorption spectrum measured by a Fourier transform infrared spectrophotometer, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

2. The resin-coated aluminum seamless can according to claim 1, wherein the surface treatment layer has a thickness of 2 nm or greater but smaller than 100 nm.

3. The resin-coated aluminum seamless can according to claim 1 or 2, wherein an L* value at a can barrel portion is 85 or greater.

4. The resin-coated aluminum seamless can according to claim 1 or 2, wherein the resin layer contains a crystalline polyester resin.

5. The resin-coated aluminum seamless can according to claim 1 or 2, wherein the resin-coated aluminum seamless can is a drawn and ironed can.

6. The resin-coated aluminum seamless can according to claim 5, wherein a central portion of a can barrel has a thickness that is 20% to 85% of a thickness of a central portion of a can bottom.

7. The resin-coated aluminum seamless can according to claim 1 or 2, wherein, in an amount of oriented crystals contained in the resin layer, a can barrel portion is greater than a can bottom portion.

8. The resin-coated aluminum seamless can according to claim 1 or 2, wherein the resin layer contains a crystalline polyester resin, and the crystalline polyester resin is a polyester resin that contains 2 to 25 mol% of isophthalic acid and that is composed primarily of ethylene terephthalate unis.

9. The resin-coated aluminum seamless can according to claim 1 or 2, wherein an X-ray diffraction intensity ratio (R) = $I_{(100)}/I_{(1-10)}$ of an X-ray diffraction intensity $I_{(100)}$ from (100) planes parallel to a surface of the resin layer to an X-ray diffraction intensity $I_{(1-10)}$ from (1-10) planes parallel to the surface of the resin layer is 1.8 or greater at a can barrel portion but smaller than 1.8 at a can bottom portion.

10. The resin-coated aluminum seamless can according to claim 1 or 2, wherein the resin layer is a multilayer resin layer, and a thickness ratio of a surface layer to a bottom layer is surface layer:bottom layer = 20:1 to 1:20.

11. The resin-coated aluminum seamless can according to claim 1 or 2, wherein the surface treatment layer and the resin layer are on a side of an outer surface of the can, and the Pa/Pb value of the surface treatment layer is 0.13 to 3.00.

12. The resin-coated aluminum seamless can according to claim 1 or 2, wherein the surface treatment layer and the resin layer are on a side of an inner surface of the can, and the Pa/Pb value of the surface treatment layer is 0.30 to 3.00.

13. A resin-coated aluminum sheet comprising:

an aluminum base material;
a surface treatment layer formed on at least one side of the aluminum base material; and
a resin layer formed on the surface treatment layer,
wherein the surface treatment layer contains aluminum hydroxide, and has a Pa/Pb value of 0.13 to 3.00 when, in an infrared absorption spectrum measured by a Fourier transform infrared spectrophotometer, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

14. A resin-coated aluminum seamless can made of the resin-coated aluminum sheet according to claim 13.

Fig.1

(a)

100

10  20  30

(b)

110

30  10  30
   20     20

Fig.2

120

Fig.3

(a)

300

30'
20'
10'

(b)

310

30'
20'
10'
20'
30'

Fig. 4

# EP 4 741 530 A1

## INTERNATIONAL SEARCH REPORT

International application No.

**PCT/JP2024/024488**

### A. CLASSIFICATION OF SUBJECT MATTER

*C23C 22/66*(2006.01)i; *B32B 15/08*(2006.01)i; *B65D 65/42*(2006.01)i
FI:  C23C22/66; B32B15/08 A; B65D65/42 B

According to International Patent Classification (IPC) or to both national classification and IPC

### B. FIELDS SEARCHED

Minimum documentation searched (classification system followed by classification symbols)

C23C22/00-22/86; B32B1/00-43/00; B65D1/00-90/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-239778 A (KABUSHIKI KAISHA KOBE SEIKO SHO) 05 September 2000 (2000-09-05) claims 1-11, paragraphs [0027]-[0028], [0044]-[0060], fig. 1 | 13 |
| A | | 1-12, 14 |
| A | JP 2007-107033 A (FURUKAWA-SKY ALUMINUM CORP.) 26 April 2007 (2007-04-26) | 1-14 |
| A | JP 3-193884 A (MITSUBISHI MATERIALS CORPORATION) 23 August 1991 (1991-08-23) | 1-14 |
| A | JP 2017-220467 A (TAIYO YUDEN CO., LTD.) 14 December 2017 (2017-12-14) | 1-14 |
| A | JP 2021-62497 A (SINTOKOGIO, LTD.) 22 April 2021 (2021-04-22) | 1-14 |
| A | JP 2006-200007 A (FURUKAWA-SKY ALUMINUM CORP.) 03 August 2006 (2006-08-03) | 1-14 |
| P, X | WO 2023/136265 A1 (TOYO KOHAN CO., LTD.) 20 July 2023 (2023-07-20) claims 7-11, paragraphs [0062]-[0082], [0089]-[0104], [0129]-[0163] | 1-14 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/024488**

| Patent document cited in search report | | | Publication date (day/month/year) | Patent family member(s) | | | Publication date (day/month/year) |
|---|---|---|---|---|---|---|---|
| JP | 2000-239778 | A | 05 September 2000 | (Family: none) | | | |
| JP | 2007-107033 | A | 26 April 2007 | (Family: none) | | | |
| JP | 3-193884 | A | 23 August 1991 | (Family: none) | | | |
| JP | 2017-220467 | A | 14 December 2017 | US | 2017/0352866 | A1 | |
| | | | | CN | 107464698 | A | |
| JP | 2021-62497 | A | 22 April 2021 | US | 2021/0107270 | A1 | |
| | | | | DE | 102020212599 | A1 | |
| | | | | CN | 112644000 | A | |
| JP | 2006-200007 | A | 03 August 2006 | (Family: none) | | | |
| WO | 2023/136265 | A1 | 20 July 2023 | JP | 2023-102210 | A | |
| | | | | JP | 2024-85510 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003013253 A
- JP 2004216801 A
- JP 2007176072 A
- JP H11012762 A